# EUROPEAN PATENT SPECIFICATION

(11) **EP 3 289 511 B1**
(45) Date of publication and mention of the grant of the patent: **04.12.2019**
(21) Application number: 16705317.2
(22) Date of filing: 01.02.2016
(51) Int. Cl.: G06F 21/52, G06F 21/54, G06F 21/56

(54) **METHOD AND SYSTEM FOR DEFENSE AGAINST RETURN ORIENTED PROGRAMMING (ROP) BASED ATTACKS**
VERFAHREN UND SYSTEM ZUR VERTEIDIGUNG GEGEN ANGRIFFE AUF DER BASIS VON RÜCKKEHRORIENTIERTER PROGRAMMIERUNG (ROP)
PROCÉDÉ ET SYSTÈME DE DÉFENSE CONTRE DES ATTAQUES BASÉES SUR UNE PROGRAMMATION ORIENTÉE RETOUR (ROP)

(30) Priority: 25.05.2015 SG 10201504066Q
(43) Date of publication of application: 07.03.2018
(73) Proprietor: Huawei International Pte. Ltd., Singapore 486035 (SG); Singapore Management University, Singapore 188065 (SG)
(72) Inventor: GAO, Debin, Singapore 178902 (SG)
(74) Representative: Goddar, Heinz J.
(86) International application number: PCT/SG2016/050047
(87) International publication number: WO 2016/190809

(56) References cited:
- US-A1- 2013 117 843
- VASILIS PAPPAS ET AL: "Smashing the Gadgets: Hindering Return-Oriented Programming Using In-place Code Randomization", SECURITY AND PRIVACY (SP), 2012 IEEE SYMPOSIUM ON, IEEE, 20 May 2012 (2012-05-20), pages 601-615, XP032456313, DOI: 10.1109/SP.2012.41 ISBN: 978-1-4673-1244-8
- LIANG YU ET AL: "Stack Layout Randomization with Minimal Rewriting of Android Binaries", 27 November 2015 (2015-11-27), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 229 - 245, XP047337434, ISSN: 0302-9743 ISBN: 978-3-642-36361-0 [retrieved on 2016-03-10] abstract Sections 1, 2, 3, 4
- LUCAS DAVI ET AL: "ROPdefender", INFORMATION, COMPUTER AND COMMUNICATIONS SECURITY, ACM, 2 PENN PLAZA, SUITE 701 NEW YORK NY 10121-0701 USA, 22 March 2011 (2011-03-22), pages 40-51, XP058002596, DOI: 10.1145/1966913.1966920 ISBN: 978-1-4503-0564-8

## Description

### FIELD OF THE APPLICATION

The application generally relates to Return Oriented Programming (ROP) mitigation strategy, and more particularly, method and system for defense against ROP-based attacks in a mobile computer system running on Acom/Advanced Reduced Instruction Set Computing (RISC) Machines (ARM) architectures.

### BACKGROUND

ROP is an advanced software exploit technique that allows an attacker to achieve a malicious purpose without code injection. ROP-based attack technique is widely adopted in software and system exploitation, to bypass modern security defense techniques, such as non-executable memory and code signing. The ROP-based attack technique can be applied to a variety of computer systems, such as desktop computer systems operating on X86 platforms and mobile computer systems running on ARM architectures, e.g. Apple iPhone operating system (iOS) and Google Android operating system.

Various mitigation strategies have been proposed to protect X86 platforms from ROP-based attacks, e.g. Address Space Layout Randomization (ASLR) and instruction randomization. However, there is no effective ROP mitigation strategy which can be applied to mobile computer systems running on ARM architectures.

Vasilis Pappas et al: "Smashing the Gadgets: Hindering Return-Oriented Programming Using In-place Code Randomization", Security and Privacy (SP), 2012 IEEE Symposium on IEEE, 20 May 2012, pages 601-615 discloses a practical mitigation technique against ROP attacks that can be applied directly on third-party software. Various narrow-scope code transformations can be applied statically, without changing the location of basic blocks, allowing the safe randomization of stripped binaries even with partial disassembly coverage. These transformations effectively eliminate about 10%, and probabilistically break about 80% of the useful instruction sequences found in a large set of PE files.

### SUMMARY OF APPLICATION

In order to provide an effective ROP mitigation strategy for defense against ROP-based attacks on a computer system, especially a mobile computer system running on an ARM architecture, embodiments of the application provide a novel instruction randomization technique which performs instruction substitution on instruction pairs with randomized equivalent instruction pairs.

According to one aspect of the application, a method for defense against ROP attacks is provided. The method comprises:
identifying a substitutable instruction pair from a binary file, the substitutable instruction pair including a first instruction for pushing a first group of registers onto a stack memory, and a second instruction for popping the first group of registers off the stack memory, wherein the first group of registers includes at least one general purpose register;
generating an equivalent instruction pair for the substitutable instruction pair, the equivalent instruction pair including a first equivalent instruction for pushing a second group of registers onto the stack memory, and a second equivalent instruction for popping the second group of registers off the stack memory, wherein the second group of registers includes the first group of registers and at least one additional register which is not being used by the substitutable instruction pair; and
overwriting the first instruction and the second instruction with the first equivalent instruction and the second equivalent instruction respectively.

In one embodiment of the application, the equivalent instruction pair is generated by: ascertaining a group of alternative instruction pairs for the substitutable instruction pair based on a group of selectable general purpose registers for the substitutable instruction pair,; and selecting a random one from the ascertained group of alternative instruction pairs as the equivalent instruction pair. In another embodiment of the application, the equivalent instruction pair is generated by: selecting the at least one additional register from a group of selectable general purpose registers for the substitutable instruction pair,; and generating the equivalent instruction pair based on the selected at least one additional register. In these two embodiments of the application, the group of selectable general purpose registers is determined according to instruction type of the substitutable instruction pair and is not being used by the substitutable instruction pair

In one embodiment of the application, the binary file is comprised in a compressed application file which is to be loaded into a computer system, the method further comprising: unpacking the compressed application file to locate the binary file from the unpacked application file; and after modifying the unpacked application file by overwriting the substitutable instruction pair identified in the binary file with the generated equivalent instruction pair, repacking the modified application file.

In another embodiment of the application, before identifying the substitutable instruction pair from the binary file, the method further comprising: ascertaining a file to be mapped into a memory during a file mapping procedure as the binary file if the file to be mapped into the memory is in binary format; and mapping the binary file into the memory.

According to another aspect of the application, a system for defense against ROP attacks is provided. The system comprises: a processor and a memory communicably coupled with the processor for storing instructions which are executable by the processor to cause the processor to:
identify a substitutable instruction pair from a binary file, the substitutable instruction pair including a first instruction for pushing a first group of registers onto a stack memory, and a second instruction for popping the first group of registers off the stack memory, wherein the first group of registers includes at least one general purpose register,
generate an equivalent instruction pair for the substitutable instruction pair, the equivalent instruction pair including a first equivalent instruction for pushing a second group of registers onto the stack memory, and a second equivalent instruction for popping the second group of registers off the stack memory, wherein the second group of registers includes the first group of registers and at least one additional register which is not being used by the substitutable instruction pair, and
overwrite the first instruction and the second instruction with the first equivalent instruction and the second equivalent instruction respectively.

According to another aspect of the application, a non-transitory computer-readable storage medium is provided which has stored thereon instructions which, if performed by a computer system, would cause the computer system to perform the method for defense against ROP attacks mentioned above.

With the ROP mitigation strategy provided in the embodiments of the application, applications and systems running on ARM architectures can be successfully protected from ROP based attacks. No extra instructions and control flow transfer need to be introduced into the binary file, and therefore the length of the instructions and the size of the relevant binary file would remain unchanged, and it is not required to recover the control flow from elsewhere.

### BRIEF DESCRIPTION OF THE DRAWINGS

The application will be described in detail with reference to the accompanying drawings, in which:
Figure 1 is a flow chart illustrating a method for defense against ROP-based attacks according to a first embodiment of the application;
Figure 2A illustrates a part of a binary file from which a substitutable instruction pair is identified according to one example of the first embodiment;
Figure 2B illustrates the part of the binary file in which the substitutable instruction pair in Figure 2A is overwritten with an equivalent instruction pair;
Figure 3A shows a sp-based addressing instruction which is interposed between a substitutable instruction pair according to another example of the first embodiment;
Figure 3B shows the modified sp-based addressing instruction after the substitutable instruction pair in Figure 3A is overwritten with an equivalent instruction pair;
Figure 3C shows the offset value modification in the sp-based addressing instruction in Figure 3B; and
Figure 4 is a flow chart illustrating a method for defense against ROP-based attacks according to a second embodiment of the application.

### DETAILED DESCRIPTION OF EMBODIMENTS OF THE APPLICATION

In the following description, numerous specific details are set forth in order to provide a thorough understanding of various illustrative embodiments of the application. It will be understood, however, to one skilled in the art, that embodiments of the application may be practiced without some or all of these specific details. It is understood that the terminology used herein is for the purpose of describing particular embodiments only, and is not intended to limit the scope of the application. In the drawings, like reference numerals refer to same or similar functionalities or features throughout the several views.

Embodiments of the application provide a ROP mitigation strategy for computer systems, particularly mobile computer systems running on ARM architectures. This strategy can significantly reduce the possibility of ROP-based attacks on the computer systems.

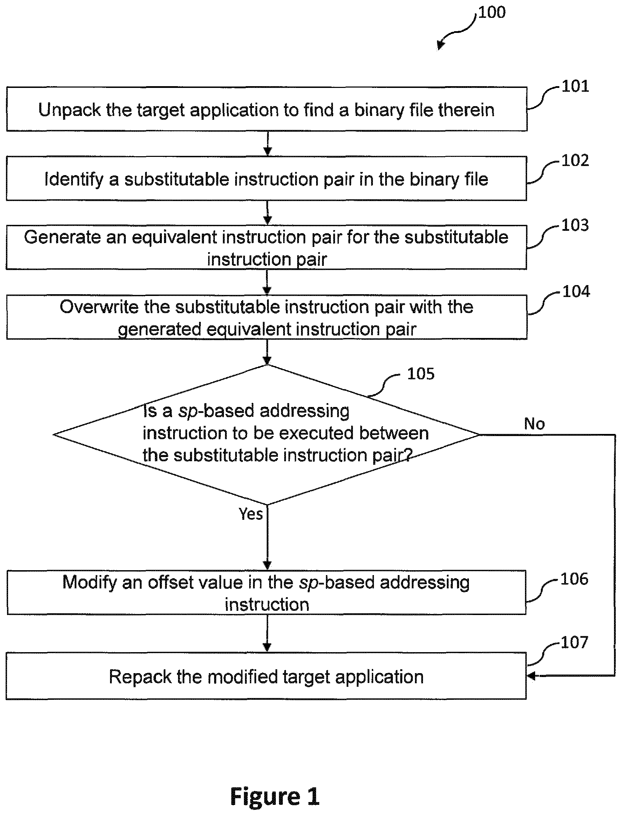

Figure 1 is a flow chart illustrating a method 100 of defense against ROP-based attacks according to a first embodiment of the application. In this embodiment, the method 100 is applied to rewrite a target application, for execution by a mobile computer system, to prevent an adversary from successfully performing a ROP-based attack on this target application.

In block 101, the target application is unpacked to locate at least one binary file therein.

In one example of the embodiment, the mobile computer system is provided with a Google Android operating system, the target application is an Android application, e.g. an e-book reader named FEReader. In this example, an Android PacKage (APK) tool for unpacking and repacking Android applications is used to unpack the target application. It is to be noted that other tools may be used to unpack the target application in other examples of the embodiment, which depend on the type of the target application.

In block 102, a substitutable instruction pair is identified from the binary file. The substitutable instruction pair includes a PUSH instruction for pushing/storing a first group of registers onto a stack memory and a POP instruction for popping/removing the first group of registers off/from the stack memory.

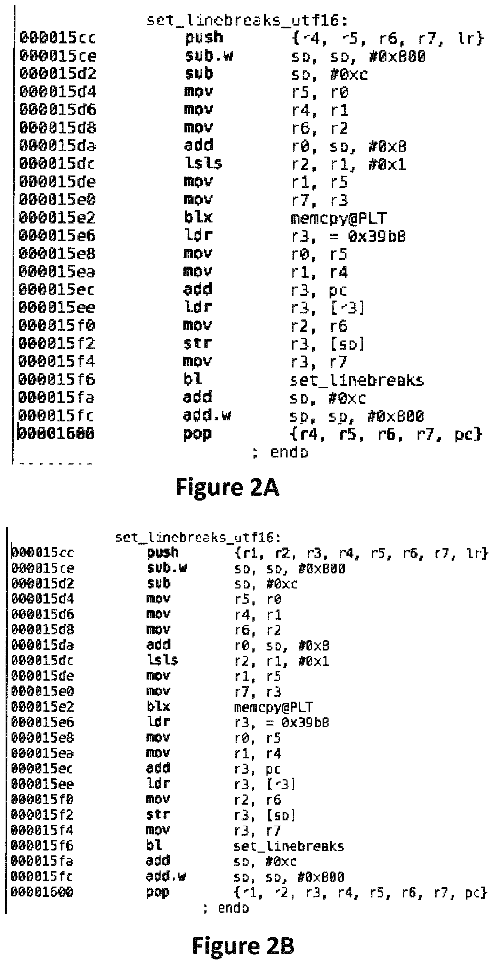

Referring to Figure 2A which shows a part of a binary file from which a substitutable instruction pair is identified according to one example of the first embodiment. As shown in Figure 2A, the substitutable instruction pair is identified in a linebreak shared library, where the PUSH instruction is set_linebreaks_utf16:000015cc push {r4, r5, r6, r7, lr}; the POP instruction is 00001600 pop {r4, r5, r6, r7, pc}. In the aforementioned two instructions, r4, r5, r6, r7 are general purpose registers; lr is a link register which is a special purpose for holding the memory address to return to when the PUSH instruction completes; pc is a program counter which is also a special purpose register for holding the memory address of the next instruction that would be executed. According to the aforementioned PUSH instruction and the POP instruction, in this example, the first group of registers includes four general purpose registers r4, r5, r6, r7 which would be pushed and popped by this substitutable instruction pair.

It is to be noted that the number of general purpose registers used by a substitutable instruction pair may be varied and the first group of registers used by the substitutable instruction pair includes at least one general purpose register.

In block 103, an equivalent instruction pair which is to be used to overwrite the substitutable instruction pair is generated. The equivalent instruction pair includes an equivalent PUSH instruction and an equivalent POP instruction. The equivalent PUSH instruction is configured to push/store a second group of registers into the stack memory; the equivalent POP instruction is configured to pop/remove the second group of registers off/from the stack memory. The second group of registers includes the first group of registers and at least one additional register which is not within the first group of registers and selected from a group of selectable general purpose registers.

The group of selectable general purpose registers is determined according to an instruction set type of the substitutable instruction pair. Specifically, the group of selectable general purpose registers includes at least one of the general purpose registers available for the instruction set type of the substitutable instruction pair except the general purpose register r0 and those being used by the substitutable instruction pair. Typically, the group of selectable general purpose registers includes all of the general purpose registers available for the instruction set type of the substitutable instruction pair except the general purpose register r0 and those being used by the substitutable instruction pair. If the instruction set type of the substitutable instruction pair is a THUMB instruction set, there are eight available general purpose registers r0-r7 in total. If the instruction set type of the substitutable instruction pair is an ARM instruction set, there are twelve available general purpose registers r0-r11 in total.

In this embodiment, the equivalent instruction pair may be generated through the following: generate a group of alternative instruction pairs for the substitutable instruction pair according to the group of selectable general purpose registers; then select a random one from the group of alternative instruction pairs as the equivalent instruction pair. It should be noted that the group of alternative instruction pairs includes at least one alternative instruction pair.

Alternatively, the equivalent instruction pair may be generated by the following: select at least one additional register from the group of selectable general purpose registers, then generate an equivalent instruction pair using the selected additional register.

In the example as shown in Figure 2A, the instruction set type of the substitutable instruction pair is a THUMB instruction set, thus the available general purpose registers include r0-r7. Since r4-r7 have been used by the substitutable instruction pair, the at least one additional register may be selected from r1-r3. Table 1 sets out all of the alternative instruction pairs for the substitutable instruction pair in the example of Figure 2A.

**Table 1**

| NO. | Alternative Instruction Pairs | |
|---|---|---|
| 1 | push {r1, r4, r5, r6, r7, lr} | pop {r1, r4, r5, r6, r7, pc} |
| 2 | push {r2, r4, r5, r6, r7, lr} | pop {r2, r4, r5, r6, r7, pc} |
| 3 | push {r3, r4, r5, r6, r7, lr} | pop {r3, r4, r5, r6, r7, pc} |
| 4 | push {r1, r2, r4, r5, r6, r7, lr} | pop {r1, r2, r4, r5, r6, r7, pc} |
| 5 | push {r1, r3, r4, r5, r6, r7, lr} | pop {r1, r3, r4, r5, r6, r7, pc} |
| 6 | push {r2, r3, r4, r5, r6, r7, lr} | pop {r2, r3, r4, r5, r6, r7, pc} |
| 7 | push {r1, r2, r3, r4, r5, r6, r7, lr} | pop {r1, r2, r3, r4, r5, r6, r7, pc} |
| 8 | push { r4, r5, r6, r7, lr} | pop {r4, r5, r6, r7, pc} |

In block 104, the substitutable instruction pair is overwritten with the generated equivalent instruction pair. The PUSH instruction of the substitutable instruction pair which is configured to for push/store a first group of registers onto a stack memory is overwritten with the equivalent PUSH instruction of the generated equivalent instruction pair which is configured to push/store a second group of registers into the stack memory. The POP instruction of the substitutable instruction pair which is configured to pop/remove the first group of registers off/from the stack memory is overwritten with the equivalent POP instruction of the generated equivalent instruction pair which is configured to pop/remove the second group of registers off/from the stack memory. Referring to Figure 2B, in this example, the equivalent instruction pair including: push {r1, r2, r3, r4, r5, r6, r7, lr} and pop {r1, r2, r3, r4, r5, r6, r7, pc} is used to overwrite the substitutable instruction pair shown in Figure 2A, i.e. the PUSH instruction: push {r4, r5, r6, r7, lr} and the POP instruction: pop {r4, r5, r6, r7, pc}.

In block 105, it is ascertained whether a stack pointer based (sp-based) addressing instruction is interposed between the substitutable instruction pair, i.e. between the PUSH instruction and the POP instruction. If a sp-based addressing instruction is interposed between the substitutable instruction pair, then the flow sequence proceeds to block 106; if not, the flow sequence proceeds to block 107.

In block 106, an offset value in the sp-based addressing instruction is modified based on the number of the additional registers used in the substitutable instruction pair and the length of each additional register used in the substitutable instruction pair.

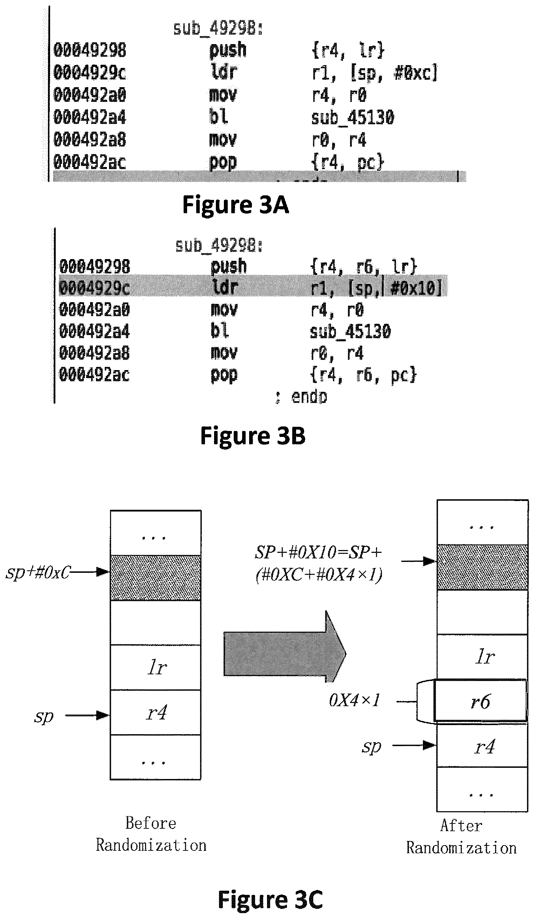

In the step of generating the equivalent instruction pair for the substitutable instruction pair, if n additional registers are used, and each of the additional registers has a length of m bytes, then the offset value in the sp-based addressing instruction is to be modified to: original offset value + m×n. One example of the embodiment is shown in Figures 3A-3C. Referring to Figure 3A, the sp-based addressing instruction "ldr r1, [sp, #0xC]" is interposed between the substitutable instruction pair, i.e. the PUSH instruction push {r4, lr} and the POP instruction pop {r4, pc}. As shown in Figures 3B and 3C, only one general purpose register r6 which has a length of 4 bytes is used to generate the equivalent instruction pair to overwrite the substitutable instruction pair. Thus, the offset value in the sp-based addressing instruction is modified to #0x10=#0xC+#0x4×1.

In block 107, the modified target application is repacked.

In the first embodiment, the method for defense against ROP-based attacks introduces an instruction randomization technique through selecting at least one additional register to be pushed and popped. This instruction randomization technique is performed during a loading process of a target application. In other embodiments, this instruction randomization technique may be performed during the execution process of a target application.

According to a second embodiment of the application, the instruction randomization technique is performed during a system's file mapping procedure. In order to realize this, the system's file mapping procedure should be modified to enable the instruction randomization capability.

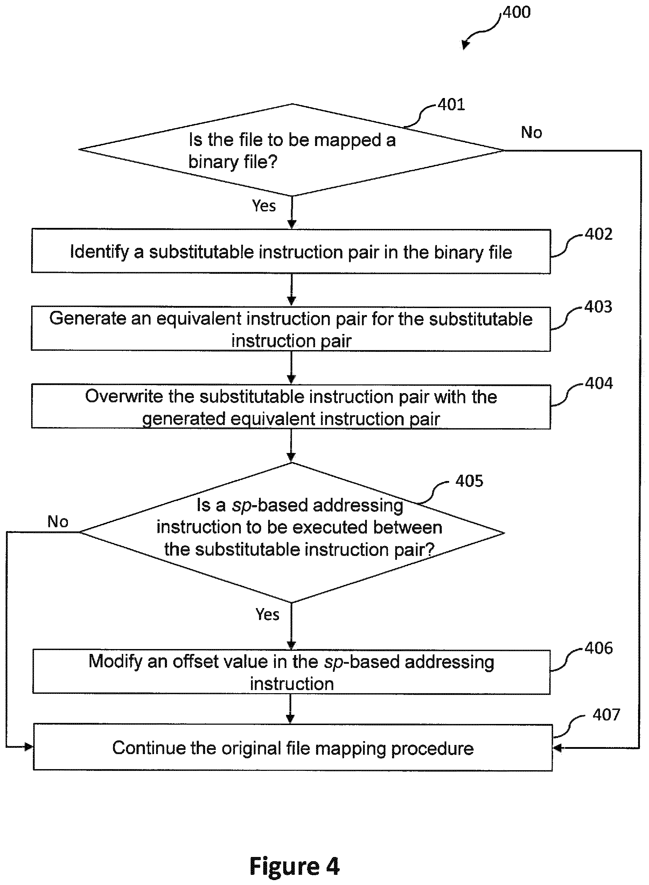

Figure 4 illustrates a method 400 for defense against ROP-based attacks according to the second embodiment of the application.

In block 401, a file to be mapped into a memory of a computer system is checked to ascertain whether it is a binary file. If the file to be mapped is a binary file, after mapping the binary file into the memory, the flow sequence proceeds to block 402; if the file to be mapped is not a binary file, after mapping the file into the memory, the flow sequence proceeds to block 407, i.e. continue the original file mapping procedure.

In block 402, a substitutable instruction pair is identified in the binary file. The substitutable instruction pair includes a PUSH instruction for pushing/storing a first group of registers onto a stack memory and a POP instruction for popping/removing the first group of registers off /from the stack memory.

This step is similar to the step shown in block 102 in the first embodiment of the application, the difference includes, in the second embodiment, the identification of the substitutable instruction pair is performed on a file image in memory, while in the first embodiment, the identification of the substitutable instruction pair is performed on a file in a file system.

In block 403, an equivalent instruction pair which is to be used to overwrite the substitutable instruction pair is generated.

In block 404, the substitutable instruction pair is overwritten with the equivalent instruction pair.

In block 405, it is ascertained whether a stack pointer based (sp-based) addressing instruction is interposed between the substitutable instruction pair, i.e. the PUSH instruction and the POP instruction, if a sp-based addressing instruction is interposed between the substitutable instruction pair, then the flow sequence proceeds to block 406; if not, the flow sequence proceeds to block 407.

In block 406, an offset value in the sp-based addressing instruction is modified based on the number of the at least one additional register used in the equivalent instruction pair and the length of each additional register used in the equivalent instruction pair.

In the second embodiment, the modification of the offset value is updated to the memory. While in the first embodiment, the modification of offset value is updated to the binary file in the target application.

The technique and strategy in the steps shown in block 403 to block 406 are similar to those shown in block 203 to block 206, and are therefore not described in detail in the second embodiment.

In block 407, the original file mapping procedure is continued.

The above-described methods for defense against ROP-based attacks may be performed by a computer system which comprises a processor and a memory communicably coupled to the processor for storing instructions which are executable by the processor to cause the processor to: identify a substitutable instruction pair in a binary file, the substitutable instruction pair including a first instruction for pushing a first group of general purpose registers onto the stack memory, and a second instruction for popping the first group of general purpose registers off the stack memory, wherein the first group of general purpose registers includes at least one general purpose register; generate an equivalent instruction pair for the substitutable instruction pair, the equivalent instruction pair including a first equivalent instruction for pushing a second group of general purpose registers onto the stack memory, and a second equivalent instruction for popping the second group of general purpose registers off the stack memory, wherein the second group of general purpose registers includes the first group of general purpose registers and at least one additional register which is not used by the substitutable instruction pair; and overwrite the substitutable instruction pair with the generated equivalent instruction pair.

According to one embodiment of the application, when generating the equivalent instruction pair, the processor is further configured to ascertain a group of alternative instruction pairs for the substitutable instruction pair according to a group of selectable general purpose registers for the substitutable instruction pair, and then randomly select one from the ascertained group of alternative instruction pairs as the equivalent instruction pair. According to another embodiment of the application, when generating the equivalent instruction pair, the processor is further configured to select the at least one additional register from a group of selectable general purpose registers for the substitutable instruction pair, and then generate the equivalent instruction pair based on the selected at least one additional register.

In the aforementioned two embodiments, the group of selectable general purpose registers is determined according to instruction type of the substitutable instruction pair and is not being used by the substitutable instruction pair, If the substitutable instruction pair is an ARM instruction pair, the group of selectable general purpose registers includes at least one of r1 to r11 which is not being used by the substitutable instruction pair. If the substitutable instruction pair is a Thumb instruction pair, the selectable general purpose registers include at least one of r1 to r7 which is not being used by the substitutable instruction pair.

According to another embodiment of the application, if the processor ascertains that a sp-based addressing instruction is interposed between the substitutable instruction pair; the processor is further configured to modify an offset value in the sp-based addressing instruction based on the number of the at least one additional register used in the equivalent instruction pair and the length of each additional register.

In one embodiment of the application, the binary file is comprised in a compressed application file which is to be loaded into a computer system, the processor is further configured to:

unpack the compressed application file to locate the binary file from the unpacked application file; and after modifying the unpacked application file by overwriting the substitutable instruction pair identified in the binary file with the generated equivalent instruction pair, repack the modified application file.

In another embodiment of the application, the processor is further configured to: before identifying the substitutable instruction pair from the binary file, ascertain a file to be mapped into a memory during a computer system's file mapping procedure as the binary file if the file to be mapped into the memory is in binary format; and map the binary file into the memory.

The foregoing description is described with reference to mobile computer systems running on ARM architectures. However, it is to be appreciated that embodiments of the application are also suitable to be applied to other platforms/operating systems, e.g. X86 platform, and even in other security directions, e.g. watermarking.

As will be appreciated from the above, embodiments of the application provide an effective method for defense against ROP-based attacks for mobile computer systems running on ARM architectures. The methods disclosed in embodiments of the application can be used by any party who wants to protect a target application and mobile computer system from ROP-based attacks, e.g. application developers, distributors, mobile system developers and application's end-users. For application distributors, such as Google Play, they may perform the method of the application when an application is being downloaded into a user device. For mobile system developers, they may introduce a few lines extra code configured to perform the method during the system's file mapping procedure. For application's end users, they may install a separate application which is to initiate the method of the application during the loading process of the target application.

The embodiments of the application introduce an instruction randomization technique which performs instruction substitution on instruction pairs, e.g. the PUSH instruction and the POP instruction, and overwrites the substitutable instruction pair with a randomized equivalent instruction pair. With this instruction randomization technique, applications and systems running on ARM architectures can be successfully protected from ROP based attacks. Further, this instruction randomization technique introduces neither extra instructions nor extra control flow transfer into the binary files, and therefore the length of the instructions and the size of the binary files would remain unchanged. Additionally, referring to the aforementioned embodiments of the application, the layout of the stack memory and the content of the substitutable instruction pair are to be changed simultaneously, and therefore no further performance cost would be required.

It is to be understood that the embodiments and features described above should be considered exemplary and not restrictive. For example, the above-described embodiments may be used in combination with each other. Many other embodiments will be apparent to those skilled in the art from consideration of the specification and practice of the application. The scope of the application should, therefore, be determined with reference to the appended claims, along with the full scope of equivalents to which such claims are entitled. Furthermore, certain terminology has been used for the purposes of descriptive clarity, and not to limit the disclosed embodiments of the application.

## Claims

1. A method for defense against Return Oriented Programming, ROP, attacks, the method comprising:
identifying (102, 402) a substitutable instruction pair from a binary file, the substitutable instruction pair including a first instruction for pushing a first group of registers onto a stack memory, and a second instruction for popping the first group of registers off the stack memory, wherein the first group of registers includes at least one general purpose register;
generating (103, 403) an equivalent instruction pair for the substitutable instruction pair, the equivalent instruction pair including a first equivalent instruction for pushing a second group of registers onto the stack memory, and a second equivalent instruction for popping the second group of registers off the stack memory, ; and
overwriting (104, 404) the first instruction and the second instruction with the first equivalent instruction and the second equivalent instruction respectively, **characterized in that** the second group of registers includes the first group of registers and at least one additional register which is not being used by the substitutable instruction pair.

2. The method according to claim 1, wherein the step of generating (103, 404) the equivalent instruction pair further comprises:
ascertaining a group of alternative instruction pairs for the substitutable instruction pair based on a group of selectable general purpose registers for the substitutable instruction pair, wherein the group of selectable general purpose registers is determined according to instruction type of the substitutable instruction pair and is not being used by the substitutable instruction pair; and
selecting a random one from the ascertained group of alternative instruction pairs as the equivalent instruction pair.

3. The method according to claim 1, wherein the step of generating (103, 403) the equivalent instruction pair further comprises:
selecting the at least one additional register from a group of selectable general purpose registers for the substitutable instruction pair, wherein the group of selectable general purpose registers is determined according to instruction type of the substitutable instruction pair and is not being used by the substitutable instruction pair; and
generating the equivalent instruction pair based on the selected at least one additional register.

4. The method according to claim 2 or claim 3, wherein if the substitutable instruction pair is an ARM™ instruction pair, the group of selectable general purpose registers includes at least one of r1 to r11 which is not being used by the substitutable instruction pair.

5. The method according to claim 2 or claim 3, wherein if the substitutable instruction pair is a Thumb™ instruction pair, the selectable general purpose registers include at least one of r1 to r7 which is not being used by the substitutable instruction pair.

6. The method of any preceding claim, further comprising:
ascertaining whether a stack pointer based, sp-based, addressing instruction is interposed between the substitutable instruction pair;
if a sp-based addressing instruction is interposed between the substitutable instruction pair, modifying an offset value in the sp-based addressing instruction based on a number of the at least one additional register used in the equivalent instruction pair and a length of each additional register.

7. The method according to any preceding claim, wherein the binary file is comprised in a compressed application file which is to be loaded into a computer system, the method further comprising:
unpacking (101) the compressed application file to locate the binary file from the unpacked application file; and
after modifying the unpacked application file by overwriting the substitutable instruction pair identified in the binary file with the generated equivalent instruction pair, repacking (107) the modified application file.

8. The method according to any one of claim 1 to claim 6, further comprising:
before identifying (102, 402) the substitutable instruction pair from the binary file, ascertaining a file to be mapped into a memory during file mapping procedure as the binary file if the file to be mapped into the memory is in binary format; and
mapping the binary file into the memory.

9. The method according to claim 7 or 8, wherein the computer system is a mobile computer system running on an ARM™ architecture.

10. A system for defense against Return Oriented Programming, ROP, attacks, comprising:
a processor and a memory communicably coupled with the processor for storing instructions which are executable by the processor to cause the processor to:
identify (101, 401) a substitutable instruction pair from a binary file, the substitutable instruction pair including a first instruction for pushing a first group of registers onto a stack memory, and a second instruction for popping the first group of registers off the stack memory, wherein the first group of registers includes at least one general purpose register,
generate (103, 403) an equivalent instruction pair for the substitutable instruction pair, the equivalent instruction pair including a first equivalent instruction for pushing a second group of registers onto the stack memory, and a second equivalent instruction for popping the second group of registers off the stack memory,, and
overwrite (104, 404) the first instruction and the second instruction with the first equivalent instruction and the second equivalent instruction respectively, **characterized in that** the second group of registers includes the first group of registers and at least one additional register which is not being used by the substitutable instruction pair.

11. The system according to claim 10, wherein the processor is further configured to ascertain a group of alternative instruction pairs for the substitutable instruction pair according to a group of selectable general purpose registers for the substitutable instruction pair, wherein the group of selectable general purpose registers is determined according to instruction type of the substitutable instruction pair and is not being used by the substitutable instruction pair, and
randomly select one from the ascertained group of alternative instruction pairs as the equivalent instruction pair.

12. The system according to claim 10, wherein the processor is further configured to select the at least one additional register from a group of selectable general purpose registers for the substitutable instruction pair, wherein the group of selectable general purpose registers is determined according to instruction type of the substitutable instruction pair and is not being used by the substitutable instruction pair, and
generate the equivalent instruction pair based on the selected at least one additional register.

13. The system according to claim 11 or claim 12, wherein if the substitutable instruction pair is an ARM™ instruction pair, the group of selectable general purpose registers includes at least one of r1 to r11 which is not being used by the substitutable instruction pair.

14. The system according to claim 11 or claim 12, wherein if the substitutable instruction pair is a Thumb™ instruction pair, the selectable general purpose registers include at least one of r1 to r7 which is not being used by the substitutable instruction pair.

15. A non-transitory computer-readable storage medium having stored thereon instructions which, if performed by a computer system, cause the computer system to perform a method according to claim 1.

## Patentansprüche

1. Verfahren zum Abwehren von rücksprungsorientierten Programmierungs(*Return Oriented Programming* - ROP)angriffen, wobei das Verfahren umfasst:
Identifizieren (102, 402) eines ersetzbaren Anweisungspaars aus einer Binärdatei, wobei das ersetzbare Anweisungspaar eine erste Anweisung zum Einspeichern einer ersten Gruppe von Registern in einem Stapelspeicher und eine zweite Anweisung zum Entnehmen der ersten Gruppe von Registern aus dem Stapelspeicher einschließt, wobei die erste Gruppe von Registern wenigstens ein Mehrzweckregister einschließt;
Erzeugen (103, 403) eines äquivalenten Anweisungspaars für das ersetzbare Anweisungspaar, wobei das äquivalente Anweisungspaar eine erste äquivalente Anweisung zum Einspeichern einer zweiten Gruppe von Registern in den Stapelspeicher und eine zweite äquivalente Anweisung zum Entnehmen der zweiten Gruppe von Registern aus dem Stapelspeicher einschließt; und
Überschreiben (104, 404) der ersten Anweisung und der zweiten Anweisung mit der ersten äquivalenten Anweisung beziehungsweise der zweiten äquivalenten Anweisung, **dadurch gekennzeichnet, dass** die zweite Gruppe von Registern die erste Gruppe von Registern und wenigstens ein zusätzliches Register einschließt, das nicht durch das ersetzbare Anweisungspaar verwendet wird.

2. Verfahren nach Anspruch 1, wobei der Schritt des Erzeugens (103, 404) des äquivalenten Anweisungspaars ferner umfasst:
Ermitteln einer Gruppe von alternativen Anweisungspaaren für das ersetzbare Anweisungspaar basierend auf einer Gruppe von auswählbaren Mehrzweckregistern für das ersetzbare Anweisungspaar, wobei die Gruppe von auswählbaren Mehrzweckregistern gemäß der Anweisungsart des ersetzbaren Anweisungspaars bestimmt wird und nicht durch das ersetzbare Anweisungspaar verwendet wird; und
Auswählen eines zufälligen einen aus der ermittelten Gruppe von alternativen Anweisungspaaren als das äquivalente Anweisungspaar.

3. Verfahren nach Anspruch 1, wobei der Schritt des Erzeugens (103, 403) des äquivalenten Anweisungspaars ferner umfasst:
Auswählen des wenigstens einen zusätzlichen Registers aus einer Gruppe von auswählbaren Mehrzweckregistern für das ersetzbare Anweisungspaar, wobei die Gruppe von auswählbaren Mehrzweckregistern gemäß der Anweisungsart des ersetzbaren Anweisungspaars bestimmt wird und nicht durch das ersetzbare Anweisungspaar verwendet wird; und
Erzeugen des äquivalenten Anweisungspaars basierend auf dem ausgewählten wenigstens einen zusätzlichen Register.

4. Verfahren nach Anspruch 2 oder 3, wobei, wenn das ersetzbare Anweisungspaar ein ARM™-Anweisungspaar ist, die Gruppe von auswählbaren Mehrzweckregistern wenigstens eins von r1 bis r11 einschließt, das nicht durch das ersetzbare Anweisungspaar verwendet wird.

5. Verfahren nach Anspruch 2 oder 3, wobei, wenn das ersetzbare Anweisungspaar ein Thumb™-Anweisungspaar ist, die auswählbaren allgemeinen Register wenigstens eins von r1 bis r7 einschließen, das nicht durch das ersetzbare Anweisungspaar verwendet wird.

6. Verfahren nach einem der vorhergehenden Ansprüche, ferner umfassend:
Ermitteln, ob eine stapelzeiger(*stack pointer*-sp)basierte Adressierungsanweisung zwischen das ersetzbare Anweisungspaar eingefügt ist;
Modifizieren eines Versatzwerts in der *sp*-basierten Adressierungsanweisung basierend auf einer Zahl des wenigstens einen zusätzlichen Registers, das in dem äquivalenten Anweisungspaar verwendet wird, und einer Länge jedes zusätzlichen Registers, wenn eine *sp*-basierte Adressierungsanweisung zwischen das ersetzbare Anweisungspaar eingefügt ist.

7. Verfahren nach einem der vorhergehenden Ansprüche, wobei die Binärdatei in einer komprimierten Anwendungsdatei enthalten ist, die in ein Computersystem geladen werden soll, wobei das Verfahren ferner umfasst:
Entpacken (101) der komprimierten Anwendungsdatei, um die Binärdatei aus der entpackten Anwendungsdatei zu lokalisieren; und
erneutes Packen (107) der modifizierten Anwendungsdatei, nach dem Modifizieren der entpackten Anwendungsdatei durch Überschreiben des in der Binärdatei identifizierten ersetzbaren Anweisungspaars mit dem erzeugten äquivalenten Anweisungspaar.

8. Verfahren nach einem der Ansprüche 1 bis 6, ferner umfassend: vor einem Identifizieren (102, 402) des geeigneten Anweisungspaars aus der Binärdatei, Ermitteln einer Datei, die während eines Dateizuordnungsvorgangs als die Binärdatei in einen Speicher zugeordnet werden soll, wenn die in den Speicher zuzuordnende Datei in einem Binärformat vorliegt; und
Zuordnen der Binärdatei in den Speicher.

9. Verfahren nach Anspruch 7 oder 8, wobei das Computersystem ein mobiles Computersystem ist, das auf einer ARM™-Architektur läuft.

10. System zum Abwehren von rücksprungsorientierten Programmierungs(ROP)angriffen, umfassend:
einen Prozessor und einen Speicher, der mitteilbar mit dem Prozessor zum Speichern von Anweisungen gekoppelt ist, die durch den Prozessor ausführbar sind, um den Prozessor zu Folgendem zu veranlassen: Identifizieren (101, 401) eines ersetzbaren Anweisungspaars aus einer Binärdatei, wobei das ersetzbare Anweisungspaar eine erste Anweisung zum Einspeichern einer ersten Gruppe von Registern in einen Stapelspeicher und eine zweite Anweisung zum Entnehmen der ersten Gruppe von Registern aus dem Stapelspeicher einschließt, wobei die erste Gruppe von Registern wenigstens ein Mehrzweckregister einschließt,
Erzeugen (103, 403) eines äquivalenten Anweisungspaars für das ersetzbare Anweisungspaar, wobei das äquivalente Anweisungspaar eine erste äquivalente Anweisung zum Einspeichern einer zweiten Gruppe von Registern in den Stapelspeicher und eine zweite äquivalente Anweisung zum Entnehmen der zweiten Gruppe von Registern aus dem Stapelspeicher einschließt; und
Überschreiben (104, 404) der ersten Anweisung und der zweiten Anweisung mit der ersten äquivalenten Anweisung beziehungsweise der zweiten äquivalenten Anweisung, **dadurch gekennzeichnet, dass** die zweite Gruppe von Registern die erste Gruppe von Registern und wenigstens ein zusätzliches Register einschließt, das nicht durch das ersetzbare Anweisungspaar verwendet wird.

11. System nach Anspruch 10, wobei der Prozessor ferner konfiguriert ist, um eine Gruppe von alternativen Anweisungspaaren für das ersetzbare Anweisungspaar gemäß einer Gruppe von auswählbaren Mehrzweckregistern für das ersetzbare Anweisungspaar zu ermitteln, wobei die Gruppe von auswählbaren Mehrzweckregistern gemäß der Anweisungsart des ersetzbaren Anweisungspaars bestimmt wird und nicht durch das ersetzbare Anweisungspaar verwendet wird, und
zufällig eins aus der ermittelten Gruppe von alternativen Anweisungspaaren als das äquivalente Anweisungspaar auszuwählen.

12. System nach Anspruch 10, wobei der Prozessor ferner konfiguriert ist, um das wenigstens eine zusätzliche Register aus einer Gruppe von auswählbaren Mehrzweckregistern für das ersetzbare Anweisungspaar auszuwählen, wobei die Gruppe von auswählbaren Mehrzweckregistern gemäß der Anweisungsart des ersetzbaren Anweisungspaars bestimmt wird und nicht durch das ersetzbare Anweisungspaar verwendet wird, und
das äquivalente Anweisungspaar basierend auf dem ausgewählten wenigstens einen zusätzlichen Register zu erzeugen.

13. System nach Anspruch 11 oder 12, wobei, wenn das ersetzbare Anweisungspaar ein ARM™-Anweisungspaar ist, die Gruppe von auswählbaren Mehrzweckregistern wenigstens eins von r1 bis r11 einschließt, das nicht durch das ersetzbare Anweisungspaar verwendet wird.

14. System nach Anspruch 11 oder 12, wobei, wenn das ersetzbare Anweisungspaar ein Thumb™-Anweisungspaar ist, die auswählbaren Mehrzweckregister wenigstens eins von r1 bis r7 einschließen, das nicht durch das ersetzbare Anweisungspaar verwendet wird.

15. Nichtflüchtiges computerlesbares Speichermedium, mit darauf gespeicherten Anweisungen, die bei Durchführung durch ein Computersystem das Computersystem veranlassen, ein Verfahren nach Anspruch 1 durchzuführen.

## Revendications

1. Procédé de défense contre des attaques de programmation orientée retour, ROP, le procédé consistant à :
identifier (102, 402) une paire d'instructions substituables à partir d'un fichier binaire, la paire d'instructions substituables comprenant une première instruction permettant de pousser un premier groupe de registres dans une mémoire de pile, et une seconde instruction permettant d'extraire le premier groupe de registres de la mémoire de pile, le premier groupe de registres comprenant au moins un registre polyvalent ;
générer (103, 403) une paire d'instructions équivalentes pour la paire d'instructions substituables, la paire d'instructions équivalentes comprenant une première instruction équivalente permettant de pousser un second groupe de registres dans la mémoire de pile, et une seconde instruction équivalente permettant d'extraire le second groupe de registres de la mémoire de pile ; et
remplacer (104, 404) la première instruction et la seconde instruction par la première instruction équivalente et la seconde instruction équivalente respectivement, **caractérisé en ce que** le second groupe de registres comprend le premier groupe de registres et au moins un registre supplémentaire qui n'est pas utilisé par la paire d'instructions substituables.

2. Procédé selon la revendication 1, dans lequel l'étape de génération (103, 404) de la paire d'instructions équivalentes consiste en outre à :
établir un groupe de paires d'instructions alternatives pour la paire d'instructions substituables sur la base d'un groupe de registres polyvalents sélectionnables pour la paire d'instructions substituables, le groupe de registres polyvalents sélectionnables étant déterminé selon le type d'instruction de la paire d'instructions substituables et n'étant pas utilisé par la paire d'instructions substituables ; et sélectionner une paire aléatoire dans le groupe établi de paires d'instructions alternatives comme paire d'instructions équivalentes.

3. Procédé selon la revendication 1, dans lequel l'étape de génération (103, 403) de la paire d'instructions équivalentes consiste en outre à :
sélectionner ledit registre supplémentaire dans un groupe de registres polyvalents sélectionnables pour la paire d'instructions substituables, le groupe de registres polyvalents sélectionnables étant déterminé selon le type d'instruction de la paire d'instructions substituables et n'étant pas utilisé par la paire d'instructions substituables ; et
générer la paire d'instructions équivalentes sur la base dudit registre supplémentaire sélectionné.

4. Procédé selon la revendication 2 ou 3, dans lequel si la paire d'instructions substituable est une paire d'instructions ARM™, le groupe de registres polyvalents sélectionnables comprend au moins l'un des registres allant de r1 à r11, qui n'est pas utilisé par la paire d'instructions substituable.

5. Procédé selon la revendication 2 ou 3, dans lequel si la paire d'instructions substituables est une paire d'instructions Thumb™, les registres polyvalents sélectionnables comprennent au moins l'un des registres allant de r1 à r7, qui n'est pas utilisé par la paire d'instructions substituables.

6. Procédé selon l'une des revendications précédentes, consistant en outre à :
établir si une instruction d'adressage basée sur un pointeur de pile (basée sur sp) est interposée entre la paire d'instructions substituables ;
modifier, si une instruction d'adressage basée sur sp est interposée entre la paire d'instructions substituables, une valeur de décalage dans l'instruction d'adressage basée sur *sp* sur la base d'un numéro dudit registre supplémentaire utilisé dans la paire d'instructions équivalentes et d'une longueur de chaque registre supplémentaire.

7. Procédé selon l'une des revendications précédentes, dans lequel le fichier binaire est compris dans un fichier d'application compressé qui doit être chargé dans un système informatique, le procédé consistant en outre à :
décompacter (101) le fichier d'application compressé afin de localiser le fichier binaire à partir du fichier d'application décompacté ; et
recompacter (107) le fichier d'application modifié après avoir modifié le fichier d'application décompressé, en remplaçant la paire d'instructions substituables identifiée dans le fichier binaire par la paire d'instructions équivalentes générée.

8. Procédé selon l'une quelconque des revendications 1 à 6, consistant en outre à : établir, avant d'identifier (102, 402) la paire d'instructions substituables à partir du fichier binaire, un fichier à mapper dans une mémoire pendant la procédure de mappage de fichiers comme fichier binaire si le fichier à mapper dans la mémoire est en format binaire ; et mapper le fichier binaire dans la mémoire.

9. Procédé selon la revendication 7 ou 8, dans lequel le système informatique est un système informatique mobile fonctionnant sur une architecture ARM™.

10. Système de défense contre les attaques de programmation orientée retour, ROP, comprenant :
un processeur et une mémoire couplée de manière à communiquer avec le processeur afin de stocker des instructions qui sont exécutables par le processeur pour amener le processeur à : identifier (101, 401) une paire d'instructions substituables à partir d'un fichier binaire, la paire d'instructions substituables comprenant une première instruction permettant de pousser un premier groupe de registres dans une mémoire de pile, et une seconde instruction permettant d'extraire le premier groupe de registres de la mémoire de pile, le premier groupe de registres comprenant au moins un registre polyvalent,
générer (103, 403) une paire d'instructions équivalentes pour la paire d'instructions substituables, la paire d'instructions équivalentes comprenant une première instruction équivalente permettant de pousser un second groupe de registres dans la mémoire de pile, et une seconde instruction équivalente permettant d'extraire le second groupe de registres de la mémoire de pile, et
remplacer (104, 404) la première instruction et la seconde instruction par la première instruction équivalente et la seconde instruction équivalente respectivement, **caractérisé en ce que** le second groupe de registres comprend le premier groupe de registres et au moins un registre supplémentaire qui n'est pas utilisé par la paire d'instructions substituables.

11. Système selon la revendication 10, dans lequel le processeur est en outre configuré pour déterminer un groupe de paires d'instructions alternatives pour la paire d'instructions substituables selon un groupe de registres polyvalents sélectionnables pour la paire d'instructions substituables, le groupe de registres polyvalents sélectionnables étant déterminé selon le type d'instruction de la paire d'instructions substituables et n'étant pas utilisé par la paire d'instructions substituables, et
sélectionner de manière aléatoire une paire dans le groupe établi de paires d'instructions alternatives comme paire d'instructions équivalentes.

12. Système selon la revendication 10, dans lequel le processeur est en outre configuré pour sélectionner ledit registre supplémentaire dans un groupe de registres polyvalents sélectionnables pour la paire d'instructions substituables, le groupe de registres polyvalents sélectionnables étant déterminé selon le type d'instruction de la paire d'instructions substituables et n'étant pas utilisé par la paire d'instructions substituables, et pour
générer la paire d'instructions équivalentes sur la base dudit supplémentaire sélectionné.

13. Système selon la revendication 11 ou 12, dans lequel si la paire d'instructions substituables est une paire d'instructions ARM™, le groupe de registres polyvalents sélectionnables comprend au moins l'un des registres allant de r1 à r11, qui n'est pas utilisé par la paire d'instructions substituables.

14. Système selon la revendication 11 ou 12, dans lequel si la paire d'instructions substituables est une paire d'instructions Thumb™, les registres polyvalents sélectionnables comprennent au moins l'un des registres allant de r1 à r7, qui n'est pas utilisé par la paire d'instructions substituables.

15. Support de stockage non transitoire lisible par ordinateur sur lequel sont stockées des instructions qui, lorsqu'elles sont effectuées par un système informatique, amènent le système informatique à effectuer un procédé selon la revendication 1.
